# EUROPÄISCHE PATENTSCHRIFT

(11) **EP 2 815 842 B1**
(45) Veröffentlichungstag und Bekanntmachung des Hinweises auf die Patenterteilung: **01.08.2018**
(21) Anmeldenummer: 14001742.7
(22) Anmeldetag: 16.05.2014
(51) Int. Cl.: B23Q 11/00, B23D 59/00

(54) **Staubsammelvorrichtung für eine Hand-Werkzeugmaschine und Hand-Werkzeugmaschine**
Dust collection device for a hand machine tool and hand machine tool
Dispositif collecteur de poussière pour une machine-outil manuelle et machine-outil manuelle

(30) Priorität: 18.06.2013 DE 102013010236
(43) Veröffentlichungstag der Anmeldung: 24.12.2014
(73) Patentinhaber: Festool GmbH, 73240 Wendlingen am Neckar (DE)
(72) Erfinder: Spengler, Wolfgang, D-73272 Neidlingen (DE); Höfer, Tobias, D-73547 Lorch (DE)
(74) Vertreter: Patentanwälte Bregenzer und Reule Partnerschaftsgesellschaft mbB

(56) Entgegenhaltungen:
- DE-U1- 29 619 801
- US-A- 5 321 890
- US-A1- 2007 034 064

## Beschreibung

Die Erfindung betrifft eine Staubsammelvorrichtung für eine Hand-Werkzeugmaschine, insbesondere für eine Säge, gemäß dem Oberbegriff des Anspruchs 1.

Eine derartige Staubsammelvorrichtung sowie eine entsprechende Hand-Werkzeugmaschine ist in US 5321890A beschrieben.

Beim Betrieb einer Hand-Werkzeugmaschine, zum Beispiel einer Säge, einem Schleifgerät oder dergleichen, fallen Stäube, Partikel, Sägespäne und anderer Schmutz an, der am Arbeitsort unerwünscht ist. Mittels eines an den Maschinen-Staubauslass angeschlossenen Saugschlauches kann solcher Partikel-Schmutz direkt vor Ort abgesaugt werden.

Wenn kein Absaugen möglich ist, werden in der Regel aus Papier bestehende Staubbehälter, also Filtersäcke, an den Auslass angeschlossen. Das Problem ist dabei jedoch, dass die Maschine an sich ein Gebläse braucht, um den Filtersack aufzublasen, so dass er einen ausreichend großen, zur Aufnahme von Partikeln geeigneten Staubsammelraum bereitstellt. Damit der flexible Staubbehälter nicht immer wieder in sich zusammensackt, ist bei einem Schleifgerät der Anmelderin ein starrer Haltebügel vorgesehen. Der Haltebügel ist jedoch bei Nichtgebrauch sperrig.

Es ist daher die Aufgabe der vorliegenden Erfindung, eine demgegenüber verbesserte Staubsammelvorrichtung für eine Hand-Werkzeugmaschine, insbesondere für eine Säge, bereitzustellen.

Zur Lösung der Aufgabe ist eine Staubsammelvorrichtung gemäß der technischen Lehre des Anspruchs 1 vorgesehen.

Es ist ein Grundgedanke der vorliegenden Erfindung, dass der Staubbehälter zwar an sich flexibel ist, also flexibel in sich zusammengefaltet werden kann, was beispielsweise mit einem Textil-Material, Papier oder dergleichen ohne weiteres möglich ist. Der Staubbehälter weist z.B. flexible Wände und/oder gelenkig aneinander angelenkte Wände auf. Damit dieser flexible Staubbehälter jedoch im aufgefalteten oder expandierten Zustand bleibt, ist die Tragstruktur vorgesehen. Damit auch die Tragstruktur und somit die Staubsammelvorrichtung insgesamt bei Nichtgebrauch und somit der Nichtgebrauchsstellung ein kleines Stauvolumen benötigt, beispielsweise für den Transport in einem Transportbehälter oder dergleichen, ist die Tragstruktur sozusagen ebenfalls faltbar oder klappbar, jedenfalls in eine Nichtgebrauchsstellung verstellbar, in der sie ein kleineres Stauvolumen benötigt.

Der Staubbehälter kann auch mindestens eine biegefeste Wand haben.

Mindestens eine Wand, vorzugsweise mehrere oder alle Wände des Staubbehälters sind luftdurchlässig. Er kann aber auch mindestens eine nicht luftdurchlässige Wand haben.

Die Tragstruktur faltet sozusagen den flexiblen Staubbehälter auf oder streift ihn jedenfalls in der Gebrauchsstellung soweit aus, dass der Staubsammelraum zur Aufnahme der Partikel weit offen steht. Wenn also beispielsweise die Hand-Werkzeugmaschine kein Gebläse oder nur ein kleines Gebläse aufweist, oder beispielsweise nur die Bewegung des Arbeitswerkzeugs, zum Beispiel die Rotation eines Sägeblatts, für eine Staubabfuhr sorgt, ist der Staubsammelraum weit geöffnet und kann Partikel aufnehmen. Unter Partikeln werden beispielsweise Staub, Späne, Sägemehl oder Schleifstaub verstanden. Zur Vereinfachung der Begrifflichkeit ist in der obigen und der nachfolgenden Beschreibung anstelle des Wortes Partikel das Wort Staub verwendet, also beispielsweise Staubsammelraum anstelle Partikelsammelraum.

Bevorzugt ist es, wenn die Tragstruktur den Staubbehälter soweit aufweitet, das er in der Gebrauchsstellung sein maximales Aufnahmevolumen bereit stellt. Die Tragstruktur kann den Stabsammelbehälter lose halten, so dass er noch eine gewisse Beweglichkeit aufweist. Bevorzugt ist es jedoch, wenn die Tragstruktur den Staubbehälter in dem aufgefalteten Zustand aussteift.

Die Handhabung der Hand-Werkzeugmaschine und der Staubsammelvorrichtung wird durch die nachfolgende Maßnahme erheblich erleichtert. Die Staubsammelvorrichtung weist eine Federanordnung auf, die die Tragstruktur in Richtung der Gebrauchsstellung belastet, so dass die Tragstruktur entgegen der Kraft der Federanordnung in die Nichtgebrauchsstellung zu verstellen ist. Die Federanordnung klappt sozusagen die Tragstruktur in einer Ausführungsform der Erfindung auf, so dass sie den Staubbehälter in die Gebrauchsstellung, insbesondere in einen aufgefalteten und ein großes Aufnahmevolumen für Partikel bereitstellenden Zustand, verstellt.

Die Federanordnung kann beispielsweise eine oder mehrere Federn umfassen, die direkt an der Tragstruktur angreifen. Möglich sind beispielsweise Schraubenfedern, elastische Bänder oder dergleichen. Mithin kann also die Federanordnung eines oder mehrere Federelemente abseits des Staubbehälters umfassen.

Es ist vorgesehen, dass die Federanordnung zumindest teilweise durch den Staubbehälter gebildet ist oder eine Feder umfasst, die einen Bestandteil des Staubbehälters bildet. Beispielsweise kann die Feder an dem Staubbehälter, zum Beispiel an einer Wand desselben, angeordnet sein. Bevorzugt ist eine Ausführungsform, bei der die Feder beispielsweise durch eine elastische Wand oder mehrere elastische Wände des Staubbehälters gebildet ist.

Der Staubbehälter weist vorzugsweise mindestens eine elastische oder federelastische Wand auf, die in der Gebrauchsstellung entlastet ist und in der Nichtgebrauchsstellung eine Federspannung aufweist. Selbstverständlich kann der Staubbehälter auch mehrere elastische/federelastische Wände aufweisen.

Es ist auch möglich, dass zum einen mindestens eine Feder des flexiblen Staubbehälters, zum andern eine einen Bestandteil der Tragstruktur bildende Feder zusammenwirken.

Es müssen aber nicht sämtliche Wände des Staubbehälters elastisch sein oder eine Feder bilden. Es können beispielsweise auch andere, zum Beispiel aus Textilmaterial oder Papier bestehende, nicht-elastische, feste oder flexible Wände des Staubbehälters vorgesehen sein.

An dieser Stelle sei erwähnt, dass der Staubbehälter beispielsweise aus Textilmaterial, Vlies, Papier oder dergleichen bestehende Wände haben kann, auch in Kombination oder als Mehrkomponentenstoffe oder mehrschichtig.

Eine bevorzugte Ausführungsform der Erfindung sieht vor, dass der Staubbehälter eine oder mehrere Entnahmeöffnungen für den Staub oder allgemeiner formuliert für Partikel aufweist. Bevorzugt liegt diese Entnahmeöffnung der Anschlusseinrichtung gegenüber. Die Entnahmeöffnung ist vorzugsweise mit einem Deckel verschließbar, der einstückig mit der Wand ist, an der die Entnahmeöffnung angeordnet ist. Bevorzugt ist die Entnahmeöffnung mittels beispielsweise eines Reißverschlusses, einer Klebeverbindung oder dergleichen leicht zu schließen.

Die Tragstruktur bildet zweckmäßigerweise einen integralen Bestandteil des Staubbehälters. Beispielsweise können feste, versteifende Komponenten der Tragstruktur in einen an sich aus Textilmaterial, Filtervlies, Papier oder dergleichen bestehenden Staubbehälter eingebunden sein, zum Beispiel eingesteckt, eingenäht oder dergleichen.

Eine in der Zeichnung näher erläuterte Ausführungsform der Erfindung sieht vor, dass der Staubbehälter lösbar an der Tragstruktur befestigbar ist und von der Tragstruktur gehalten wird. Somit kann der Staubbehälter bei Nichtgebrauch oder Verschleiß leicht ausgewechselt werden, während die Tragstruktur für die weitere Verwendung noch immer zur Verfügung steht.

Dabei ist es beispielsweise auch möglich, was in der Zeichnung nicht dargestellt ist, dass der Staubbehälter in einem Innenraum der Tragstruktur angeordnet ist. Der Staubbehälter kann beispielsweise anhand von Halteklipsen, Rastverbindungen, Klettbändern oder dergleichen lösbar an der Tragstruktur befestigt sein. Es ist auch möglich, dass Steckverbindungen zwischen einerseits dem Staubbehälter und andererseits der Tragstruktur vorgesehen sind.

Bevorzugt ist jedoch, dass der Staubbehälter einen Überzug über die Tragstruktur bildet.

Die Tragstruktur bildet zweckmäßigerweise ein faltbares Tragegestell oder umfasst ein solches.

Das Tragegestell umfasst zweckmäßigerweise eine Anordnung relativ zueinander beweglich gelagerter Tragrahmen mit einem ersten Tragrahmen und mindestens einem zweiten Tragrahmen, der zweite Tragrahmen ist relativ zum ersten Tragrahmen beweglich, beispielsweise schwenkbar, verschieblich oder dergleichen. Die entsprechenden Schwenklager und Schiebelager können beispielsweise durch Halteelemente gebildet sein oder Halteelemente umfassen, die den einen Tragrahmen am anderen Tragrahmen beweglich lagern. Es ist auch möglich, dass ein Tragrahmen eine Lageraufnahme oder einen Lagervorsprung für einen anderen Tragrahmen aufweist.

Bevorzugt ist es, wenn das Tragegestell mindestens einen Tragrahmen oder ausschließlich Tragrahmen umfasst. Zwei der Tragrahmen oder weitere Tragrahmen sind vorzugsweise schwenkbeweglich und/oder schiebebeweglich aneinander gelagert. Es ist auch möglich, das zwei nicht relativ zueinander vorstellbare Tragrahmen, z.B. ortsfeste vorgesehen sind.

Der Begriff "Tragrahmen" soll relativ weit verstanden werden und eine Tragrahmen-Struktur umfassen, die außen rahmenförmig ist. Die Tragrahmen-Struktur weist z.B. eine durch den Rahmen begrenzte Durchtrittsöffnung auf. Ein Tragrahmen kann aber auch durch eine geschlossene Tragplatte oder eine optional Luftdurchlässe aufweisende Tragplatte gebildet sein. Bei dem Tragrahmen kommt es also darauf an, dass er eine rahmenartige Außenkontur hat. Die beispielhaft gewählte Geometrie von Rechtecken, Trapezen oder dergleichen beim Ausführungsbeispiel ist nicht einschränkend zu verstehen. Selbstverständlich sind auch andere Rahmen-Geometrien möglich.

Beispielsweise wird eine Tragrahmen durch Stäbe oder Stababschnitte gebildet, die einen freien Innenraum begrenzen. Eine Ausführungsform sieht beispielsweise vor, dass mindestens ein Tragrahmen durch eine stangenartige Rahmenstruktur gebildet ist.

Es ist aber auch möglich, dass ein Tragrahmen außenseitig eine Rahmenstruktur hat, im Innern jedoch nicht offen ist, sondern beispielsweise ein Gitter aufweist. Es ist auch möglich, dass der Außenumfang eines Gitters den Tragrahmen bildet.

Eine bevorzugte Ausführungsform, die einer der Tragrahmen bei der in der Zeichnung dargestellten Staubsammelvorrichtung hat, sieht vor, dass eine Tragplatte umfasst. Es ist auch möglich, dass ein Außenumfang der Tragplatte den Tragrahmen bildet.

Die Tragplatte ist beispielsweise mit Luftdurchlässen versehen. Es sind aber auch Tragplatten möglich, die keine luftdurchlässige aufweisen. Luftdurchlässe erleichtern den Austritt von Luft aus dem Staubsammelraum, so dass kein Rückstau entsteht.

Es ist ferner vorteilhaft, wenn mindestens ein Tragrahmen die Anschlusseinrichtung trägt. Beispielsweise kann ein Anschlussstutzen zum Anschluss an den Maschinen-Staubeinlass an dem relativ strukturfesten Tragrahmen, zum Beispiel einer Tragplatte, angeordnet sein.

Mindestens ein Tragrahmen kann auch eine Wand des Staubbehälters bilden. Es ist also möglich, dass der Staubsammelraum an mindestens einer Seite beispielsweise durch einen Tragrahmen, insbesondere durch eine Tragplatte, verschlossen ist.

Eine weitere Ausführungsform der Erfindung, die in der Zeichnung noch deutlich wird, sieht vor, dass mindestens ein Tragrahmen zum Aufspannen einer Wand des Staubbehälters ausgestaltet ist.

Bevorzugt ist es, wenn der oder die Tragrahmen in jeweiligen Kantenbereichen des flexiblen Staubbehälters zu liegen kommen oder dort angeordnet sind. Insbesondere ist es vorteilhaft, wenn der Staubbehälter an dem oder den Tragrahmen aufgehängt ist, wenn er im Innenraum der Tragstruktur angeordnet ist.

Mindestens zwei Tragrahmen der Tragstruktur liegen zweckmä-ßigerweise in der Nichtgebrauchsstellung im Wesentlichen flach aneinander an. Somit ist die Tragstruktur in der Nichtgebrauchsstellung besonders kompakt.

Es ist vorteilhaft, wenn mindestens ein Tragrahmen einen Anschlag zum Anschlagen an einem anderen Tragrahmen in der Gebrauchsstellung oder der Nichtgebrauchsstellung oder beiden aufweist. Somit sind beispielsweise Endanschläge vorhanden, die die jeweilige Verstellbewegung von der Gebrauchsstellung in die Nichtgebrauchsstellung und/oder umgekehrt begrenzen.

Ein Tragrahmen kann außenseitig eine jeweils geeignete Umfangskontur aufweisen. Beispielsweise ist es vorteilhaft, wenn mindestens einer der Tragrahmen trapezförmig ist.

Bevorzugt ist es, wenn die Tragstruktur und/oder der flexible Staubbehälter in einer Richtung von dem Staubeinlass weg aufweiten.

Die Tragstruktur umfasst zweckmäßigerweise zwei Paare von Tragrahmen-Anordnungen, von denen jede Tragrahmen-Anordnung mindestens zwei Tragrahmen aufweist. Die Geometrie ist dabei vorteilhaft so günstig getroffen, dass in der Nichtgebrauchsstellung die Summe der Längen der Tragrahmen der einen Tragrahmen-Anordnung der Summe der Längen der Tragrahmen der anderen Trageanordnung im Wesentlichen entspricht, so dass die Tragrahmen der einen Tragrahmen-Anordnung an den Tragrahmen der anderen Tragrahmen-Anordnung flach aufeinander zu liegen kommen.

Der oder die Tragrahmen sind vorzugsweise federbelastet. Beispielsweise sind mindestens zwei der Tragrahmen der Tragstruktur durch die Federanordnung in eine zueinander winkelige Stellung belastet.

Eine günstige Lenkung des Staubes oder der Partikel wird dadurch erzielt, dass der Staubeinlass mit einer Lenkfläche zum Lenken des Staubs in einen vom Staubeinlass abgewandten hinteren Bereich des Staubbehälters versehen ist. Dieser hintere Bereich ist vorzugsweise weiter als ein vorderer, sich beim Staubeinlass befindlicher Bereich, so dass abseits des Staubeinlass ist ein großer Raum zur Aufnahme von Staub oder Partikeln bereitsteht.

Es ist auch vorteilhaft, wenn Staub und Partikel nach unten fallen, nämlich in einen unteren Bereich des Staubbehälters unterhalb der Anschlusseinrichtung. Dies wird insbesondere dann vorteilhaft, wenn der Staubbehälter schon in einem großen Umfang gefüllt ist. Die Seitenwandfläche der Staubsammelvorrichtung unterhalb der Anschlusseinrichtung weist zweckmäßigerweise mindestens dieselbe Flächenausdehnung oder auch eine größere Flächenausdehnung auf, wie die Anschlusseinrichtung. Somit ist also unterhalb der Anschlusseinrichtung viel Platz und Raum zur Aufnahme von Staub oder Partikeln.

Die erfindungsgemäße Hand-Werkzeugmaschine ist beispielsweise eine Säge, insbesondere eine Kreissäge oder Stichsäge, kann aber selbstverständlich auch eine andere, insbesondere elektromotorisch oder pneumatisch angetriebene Hand-Werkzeugmaschine sein, zum Beispiel ein Schleifgerät oder dergleichen. Insbesondere dann, wenn die Hand-Werkzeugmaschine eine Maschine ohne Gebläse oder Lüfter für die Staubabfuhr ist, kann die erfindungsgemäße Staubsammelvorrichtung mit Vorteil verwendet werden. Sie ist jedoch auch dann praktisch, wenn ein Staubabfuhrgebläse vorhanden ist. Vorzugsweise ist also die erfindungsgemäß mit der Staubsammelvorrichtung ausgestattete Hand-Werkzeugmaschine eine solche ohne ein eigenes Staubabfuhr-Gebläse.

Nachfolgend wird ein Ausführungsbeispiel der Erfindung anhand der Zeichnung erläutert. Es zeigen:
- Figur 1: eine perspektivische Schrägansicht, einer Hand-Werkzeugmaschine in Gestalt einer Säge mit einer Staubsammelvorrichtung gemäß der Erfindung,
- Figur 2: eine hintere Teil-Seitenansicht der Anordnung gemäß Figur 1,
- Figur 3: die Staubsammelvorrichtung gemäß Figuren 1, 2 in einer perspektivischen Schrägansicht,
- Figur 4: die Staubsammelvorrichtung gemäß Figur 3, jedoch ohne Staubbehälter, so dass die Tragstruktur sichtbar ist,
- Figur 5: eine Frontalansicht der Tragstruktur gemäß Figur 4,
- Figur 6: die Tragstruktur gemäß Figuren 4, 5 in in eine Nichtgebrauchsstellung gefaltetem Zustand perspektivisch schräg dargestellt,
- Figur 7: die Tragstruktur gemäß Figuren 4-6 in gefaltetem Zustand von der Seite,
- Figur 8: eine Seitenansicht der Staubsammelvorrichtung gemäß Figuren 1-7, und
- Figur 9: eine Schnittdarstellung der Staubsammelvorrichtung gemäß Figur 8 entlang einer Schnittlinie A-A.

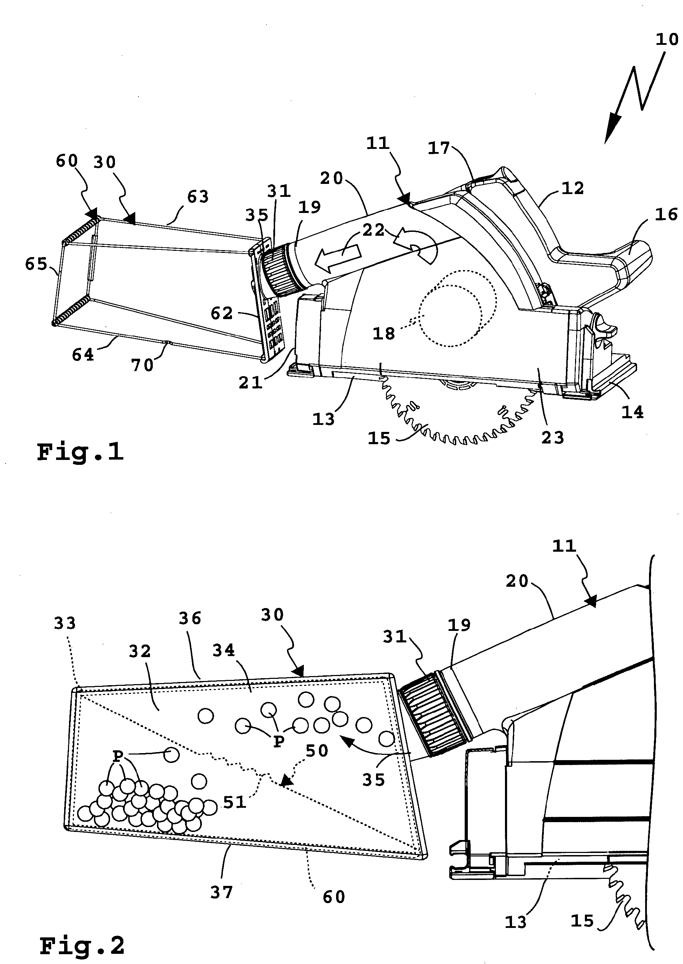

Eine in den Figuren 1 und 2 dargestellte Hand-Werkzeugmaschine 10 ist beispielsweise eine Säge 11, insbesondere eine Kreissäge, könnte aber selbstverständlich auch ein Schleifgerät oder dergleichen sein. In einem Maschinengehäuse 12 der Hand-Werkzeugmaschine 10, bei der es sich exemplarisch um eine Tauchkreissäge handelt, die aber auch beispielsweise als eine Pendelhauben-Kreissäge ausgestaltet sein kann, ist ein Antriebsmotor 18 zum Antreiben eines Werkzeugs 15, beispielsweise eines Sägeblatts, angeordnet. Das Werkzeug 15 steht beim Betrieb bzw. beim Sägen eines Werkstücks nach unten vor eine Führungsplatte 14 der Hand-Werkzeugmaschine 10 vor. Das Werkzeug 15 ist zumindest teilweise in einem Absaugraum 13 angeordnet, also von oben her abgedeckt.

Das Maschinengehäuse 12 weist einen oder mehrere Handgriffe, zum Beispiel einen Handgriff 16, zum ergreifen durch einen Bediener auf. Oben am Maschinengehäuse 12 befindet sich ein Schalter 17 zum Einschalten und Ausschalten des Antriebsmotors 18. Der Antriebsmotor 18 ist ein Elektromotor, wobei ein pneumatischer Antrieb ohne weiteres auch möglich ist.

Der Absaugraum 13 mündet in einen Staubabfuhr-Kanal 20 aus, der seinerseits einen Maschinen-Staubauslass 19 an seinem freien Endbereich hat. Der Maschinen-Staubauslass 19 befindet sich an einer Rückseite 21 der Hand-Werkzeugmaschine 10.

Durch die Rotation des Werkzeugs 15 werden beim Sägebetrieb der Hand-Werkzeugmaschine 10 anfallende Partikel P, zum Beispiel Späne, Staub oder dergleichen, in Richtung des Staubabfuhr-Kanals 20 ausgestoßen und strömen mit einer durch Pfeile angedeuteten Strömung 22 nach hinten zum Maschinen-Staubauslass 19. Ein Gebläse, mit dem die Partikel P in Richtung des Maschinen-Staubauslasses 19 geblasen werden könnten, ist bei der Hand-Werkzeugmaschine 10 also nicht vorhanden, wäre jedoch optional auch möglich. In an sich bekannter Weise kann die Hand-Werkzeugmaschine 10 in Verbindung mit einem Staubsauger verwendet werden, dessen Saugschlauch an den Maschinen-Staubauslass 19 angeschlossen werden kann.

Aber auch ohne einen solchen Staubsauger funktioniert die Hand-Werkzeugmaschine 10 sehr bedienerfreundlich und ergonomisch. Damit die Partikel P nicht in die Umgebung frei hinaus gelangen können, wenn kein Staubsauger angeschlossen ist, ist eine Staubsammelvorrichtung 30 im Sinne der Erfindung vorgesehen.

Die Staubsammelvorrichtung 30 kann mittels einer Anschlusseinrichtung 31 an den Maschinen-Staubauslass 19 angeschlossen werden, so dass dieser mit einem Staubeinlass 35 der Staubsammelvorrichtung 30 kommuniziert. Die aus dem Maschinen-Staubauslass 19 ausgestoßenen Partikel P (Figur 2) strömen dann in einen Staubsammelraum 34 der Staubsammelvorrichtung 30 Freie ein und werden dort gesammelt. Der Bediener wird also durch frei in die Umgebung gelangende Partikel P nicht behindert.

Insbesondere weil kein Gebläse zum fördern der Partikel P bei der Hand-Werkzeugmaschine 10 vorhanden ist, ist die nachfolgend detailliert beschriebene Struktur der Staubsammelvorrichtung 30 vorteilhaft.

Die Staubsammelvorrichtung 30 weist einen flexiblen Staubbehälter 32 auf, dessen Innenraum den Staubsammelraum 34 bildet, und eine diesen stabilisierende und den Staubbehälter 32 quasi aufspannende Tragstruktur 33 auf. In einer zur Nutzung und zum Gebrauch der Staubsammelvorrichtung 30 vorgesehenen Gebrauchsstellung G, die beispielsweise in den Figuren 1 und 2 dargestellt ist, ist also der Staubsammelraum 34 weit offen, so dass die Partikel P ohne ernsthaften Widerstand in den Staubsammelraum 34 einströmen können. Dort steht viel Platz zur Verfügung, was eine effektive Spanabfuhr und Staubabfuhr ermöglicht.

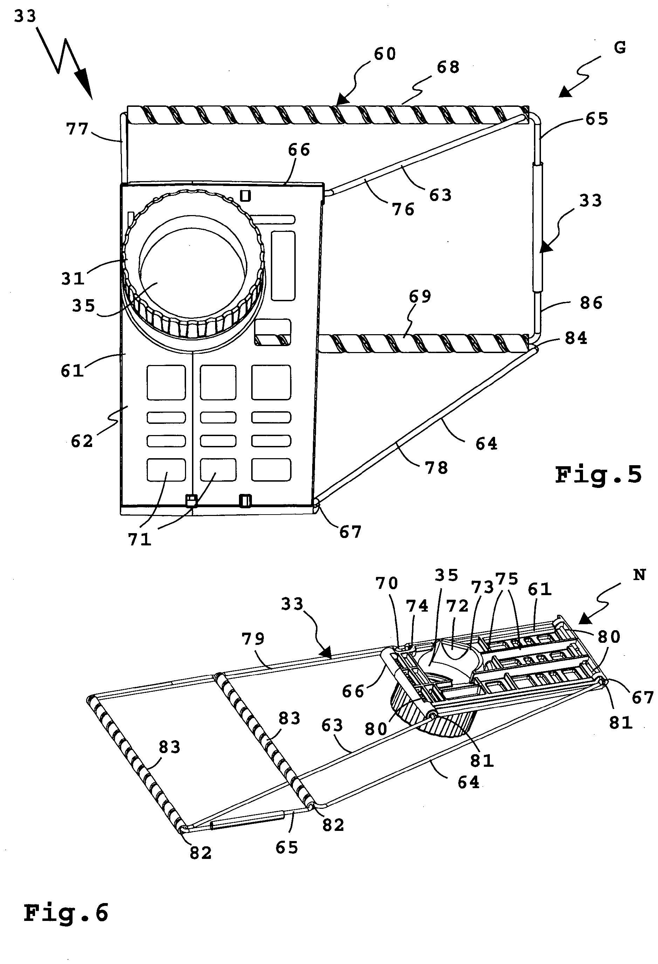

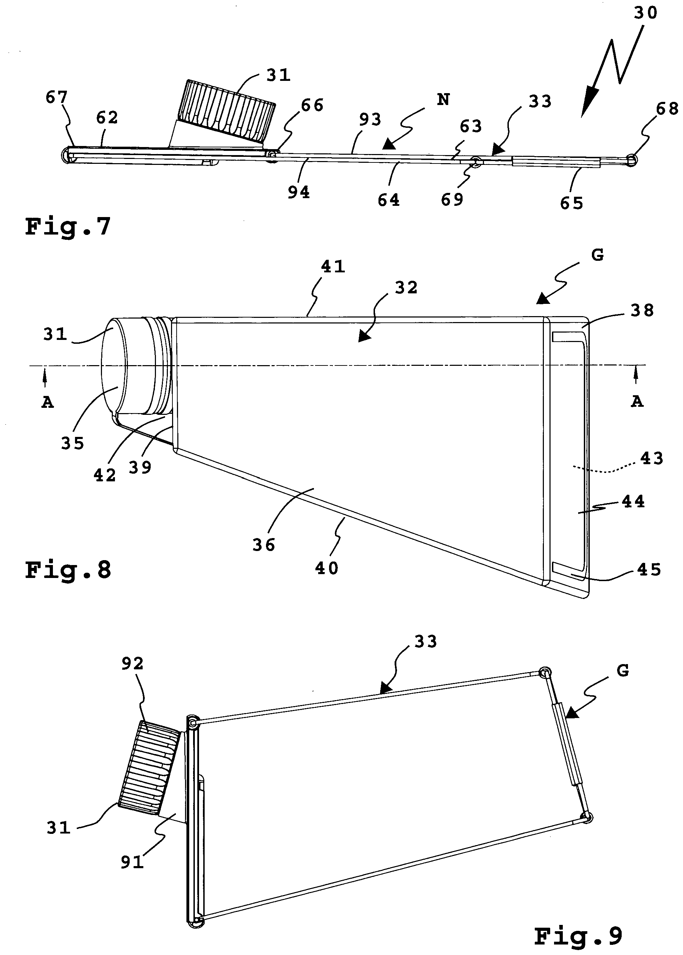

Die Staubsammelvorrichtung 30 ist jedoch, was man insbesondere in den Figuren 1 und 2 sieht, in dieser Gebrauchsstellung G sehr voluminös, weist also dann ein großes Stauvolumen auf. Zum Verstauen beispielsweise in einer Transportbox, in der auch die Hand-Werkzeugmaschine 10 aufgenommen sein kann, ist die Staubsammelvorrichtung 30 nämlich in eine Nichtgebrauchsstellung N verstellbar, was exemplarisch am Beispiel der Tragstruktur 33 in den Figuren 6 und 7 sichtbar wird.

Bei einer erfindungsgemäßen Staubsammelvorrichtung, also auch der Staubsammelvorrichtung 30, ist es zweckmäßig, wenn sowohl die Tragstruktur als auch der flexible Staubbehälter jeweils in eine Faltstellung bringbar sind. Das ist auch beim Staubbehälter 32 und der Tragstruktur 33 möglich.

Der flexible Staubbehälter 32 weist eine obere Wand 36, eine untere Wand 37 sowie eine hintere Wand 38 und eine vordere Wand 39 auf. Eine elastische Seitenwand 40 und eine weitere elastische Seitenwand 41 erstrecken sich zwischen der oberen und der unteren Wand 36, 37 sowie zwischen der vorderen und hinteren Wand 39, 38. Die Anordnung der Wände 36-41 begrenzt den Staubsammelraum 34.

Die Staubsammelvorrichtung 30 weist eine an ergonomische Verhältnisse optimal angepasste Außenkontur bzw. Außengeometrie auf. Beispielsweise fluchtet die Seitenwand 41 mit einer Seitenwand 23 des Maschinengehäuses 12 oder ist gegenüber dieser seitlich etwas zurückversetzt, so dass randseitige Schnitte mit dem Werkzeug 15 ohne weiteres möglich sind. Im Bereich der Anschlusseinrichtung 31 ist die Staubsammelvorrichtung 30 relativ schmal, so dass sie einem Ergreifen der Hand-Werkzeugmaschine 10 nicht oder nur unwesentlich im Wege steht.

Nach hinten hin wird die Staubsammelvorrichtung 30 weiter, d.h. dass die Fläche der hinteren Wand 38 größer als die Fläche der vorderen Wand 39 ist. Somit steht gerade im hinteren Bereich des Staubsammelraum 34 besonders viel Aufnahmekapazität für Partikel P zur Verfügung. Die Partikel P werden auch, wie man in Figur 2 exemplarisch sieht, durch eine Lenkfläche 72 zunächst nach oben hin, d.h. in Richtung der oberen Wand 26 abgelenkt, so dass sie in einem Bereich weit ab vom Staubeinlass 35 strömen können. Die Staubsammelvorrichtung 30 weist eine am Staubbehälter 32 vorgesehene Entnahmeöffnung 43 für den im Staubsammelraum 34 angesammelten Staub bzw. die Partikel P auf. Die Entnahmeöffnung 43 und ein Einlass 42 des Staubbehälters 32, durch den die Partikel P in den Staubsammelraum 34 einströmen können, liegen einander gegenüber. Der Einlass 42 befindet sich nämlich an der vorderen Wand 39, während die Entnahmeöffnung 43 hinten, an der Wand 38 angeordnet ist.

Die Entnahmeöffnung 43 ist durch einen Deckel 44 verschließbar. Der Deckel 44 könnte von der Wand 39 separates Bauteil sein, ist jedoch vorliegend mit der Wand 39 einstückig. Der Deckel 44 könnte anhand von lösbaren Verbindungsmitteln, zum Beispiel Klettverschlüssen oder dergleichen anderen Haftelementen, lösbar mit der Wand 39 verbindbarer und verschließbarer Deckel sein. Auch Druckknöpfe oder dergleichen sind durchaus denkbar. Vorliegend ist jedoch eine einfache Betätigung mittels eines Reißverschlusses 45 vorgesehen. Der Reißverschluss 45 erstreckt sich etwa U-förmig entsprechend der Außenkontur des Deckels 44 an der Entnahmeöffnung 43 entlang.

Die Tragstruktur 33 ist eine Faltstruktur, das heißt sie kann ebenso wie der Staubbehälter 32 in die in den Figuren 6 und 7 dargestellte Nichtgebrauchsstellung N gefaltet oder verstellt werden. Die Staubsammelvorrichtung 30 richtet sich jedoch von selbst in die Gebrauchsstellung G auf. Dazu ist eine Federanordnung 50 vorgesehen, beispielsweise eine schematisch angedeutete Feder 51, zum Beispiel eine Schraubenfeder, die direkt an der Tragstruktur 33 angeordnet ist

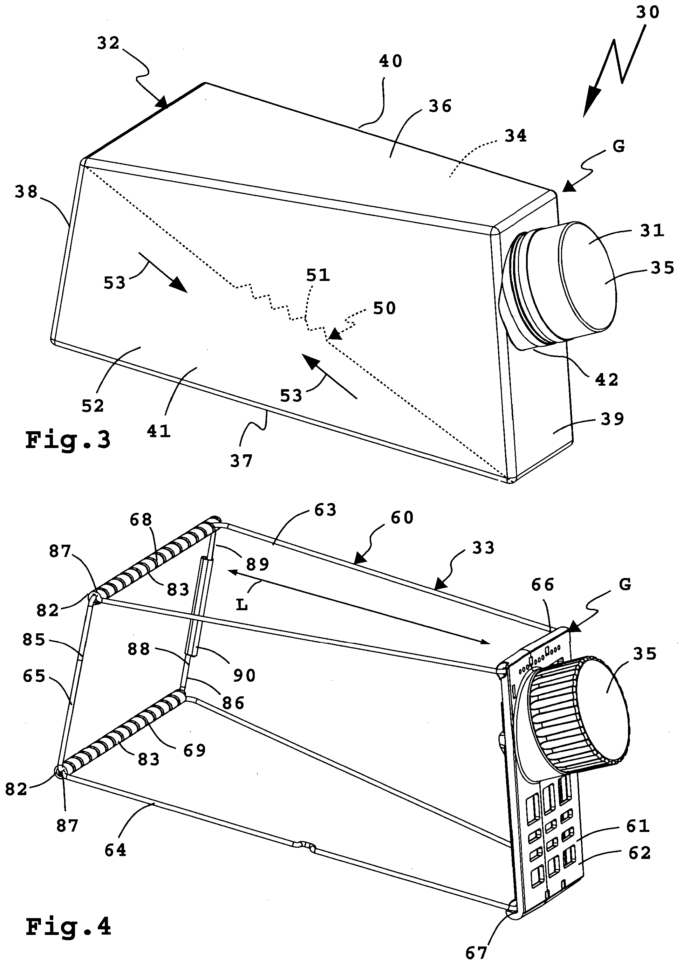

In besonders günstiger Weise wirkt jedoch bei der Staubsammelvorrichtung 30 eine Feder oder mehrere Federn 52, die durch die Seitenwände 40, 41 gebildet sind. Durch Kraftpfeile 53 (Figur 3) ist die Wirkung der Seitenwände 40, 41, die federelastisch oder elastisch sind, angedeutet.

Die Wirkung der Federanordnung 50 steht in einem vorteilhaften Zusammenhang mit der Struktur und dem Aufbau der Tragstruktur 33, wie nachfolgend deutlich wird:
Die Tragstruktur 33 umfasst ein Tragegestell 60, das sozusagen ein klappbares oder faltbares Tragegestell darstellt. Eine im Bereich der Anschlusseinrichtung 31 vorgesehene Tragplatte 61 bildet ein erstes Tragelement des Tragegestells 60. Die einzelnen Trageelemente werden nachfolgend als Tragrahmen bezeichnet, insoweit nämlich ihre jeweiligen Außenumfangsbereiche in den Kantenbereichen des Staubbehälters 32 zu liegen kommen und den Staubbehälter 32 quasi aufspannen.

Das Tragegestell 60, insbesondere die Tragstruktur 33, ist nämlich im Innenraum des Staubbehälters 32 angeordnet. Der Staubbehälter 32 ist also ein Überzug über das Tragegestell 60 und erfüllt dabei zum einen die Funktion, die Partikel P zu sammeln und zurückzuhalten, zum andern aber auch eine die Tragstruktur 33 aufspannende und in der aufgerichteten Gebrauchsstellung G haltende Funktion.

Man kann sich vorstellen, dass im Innenraum des in der Gebrauchsstellung G befindlichen Tragegestells 60 auch ein Staubbehälter aufgehängt, beispielsweise mit entsprechenden Halteklammern befestigt oder dergleichen, sein könnte.

Das Tragegestell 60 weist also einen vorderen, die Anschlusseinrichtung 31 tragenden Tragrahmen 62 sowie einen diesem gegenüberliegenden hinteren Tragrahmen 65 auf. Zwischen den beiden Tragrahmen 62, 65 erstrecken sich ein oberer Tragrahmen 63 und ein unterer Tragrahmen 64.

Die Tragrahmen 63, 64 sind den oberen und unteren Wänden 36, 37 des Staubbehälters 32 zugeordnet und versteifen diese in der Gebrauchsstellung G. Die vordere Wand 39 des Staubbehälters 32 überdeckt den vorderen Tragrahmen 62 oder die Tragplatte 61, während die hintere Wand 38 sich über den Tragrahmen 65 hinweg erstreckt. Die Seitenwände 40, 41 werden durch die Zusammenwirkung sämtlicher Tragrahmen 62-65 mit ihren jeweils den Seitenwänden 40, 41 zugewandten Außenseitenkanten aufgespannt.

Der obere Tragrahmen 63 und der unteren Tragrahmen 64 sind anhand von Schwenklagern 66, 67 schwenkbar am vorderen Tragrahmen 62 angelenkt. Zwischen dem hinteren Tragrahmen 65 und dem oberen und dem unteren Tragrahmen 63, 64 sind weitere Schwenklager 68, 69 vorgesehen. Somit kann also das Tragegestell 60 zusammen geklappt oder gefaltet werden, so dass es eine Nichtgebrauchsstellung N oder Faltstellung gemäß Figuren 6, 7 einnimmt.

Ein Anschlag 70, der beispielsweise am unteren Tragrahmen 65 vorgesehen ist, schlägt in der Nichtgebrauchsstellung N an der Tragplatte 61 oder dem vorderen Tragrahmen 62 an. Beispielsweise ist an der Tragplatte 61 eine Aussparung 74 für den Anschlag 70 vorgesehen. Dadurch wird verhindert, dass sich die Tragrahmen 62-65 aus Richtung der Gebrauchsstellung G über die Nichtgebrauchsstellung N hinaus verstellen lassen, was auch zu einer Verklemmung oder Verkeilung der Tragrahmen 62-65 führen könnte.

Die Tragrahmen 63-65 sind sozusagen offene Tragrahmen. Sie stehen also einer Strömung der Luft in Richtung der Wände 36-41 des Staubbehälters 32 überhaupt nicht im Wege. Die Tragrahmen 63, 65 liegen lediglich an den Innenkanten des Staubbehälters 32 an. Dort stören sie nicht. Aber auch die an sich relativ massive, beispielsweise aus Kunststoff bestehende Tragplatte 61 steht einer Luftströmung kaum im Wege, da sie nämlich Luftdurchlässe 71 aufweist.

Die Lenkfläche 72 ist in besonders günstiger Weise durch einen Lenkkörper 73 gebildet, der einen integralen Bestandteil der Tragplatte 61 bildet.

Weiterhin ist es vorteilhaft, dass die Tragplatte 61 durch eine Rippenstruktur 75 stabilisiert ist, dennoch leicht ist.

Die Tragrahmen 63 und 64 haben sich in einer Längserstreckungsrichtung L der Staubsammelvorrichtung 30 erstreckende Stangenelemente 76, 77, 78, 79, die den in den Kantenbereichen zwischen den oberen und unteren Wänden 36, 37 einerseits und den Seitenwänden 40, 41 andererseits zugeordnet sind und dort in der Gebrauchsstellung G zu liegen kommen.

Von den Stangenelementen 76-79 weg erstrecken sich Lagerschenkel 80, die in Lageraufnahmen 81 an der Tragplatte 61, also dem Tragrahmen 62, eingreifen. Die Lagerschenkel 80 sind mit den Stangenelementen 76-79 zweckmäßigerweise einstückig und schließen mit diesen zweckmäßigerweise einen Winkel von etwa 90° ein. Mithin können also die Lagerschenkel 80 in den Lageraufnahmen 81 schwenken, so dass die Schwenklager 66, 67 dadurch gebildet sind.

An der gegenüberliegenden Seite sind ebenfalls Lagerschenkel 84 vorgesehen, die von den Stangenelementen 76-79 winkelig abstehen und in Lageraufnahmen 82 eingreifen. Die Lageraufnahmen 82 sind beispielsweise an Lagerelementen 83 vorgesehen. Die Lagerelemente 83 umfassen beispielsweise gewendelte Kunststoff teile, Rohrelemente oder dergleichen, von deren Längsenden her die Lagerschenkel 84 her eingreifen.

Der hintere Tragrahmen 65 umfasst Stangenelemente 85, 86 die sich zwischen dem oberen und dem unteren Tragrahmen 63, 64 erstrecken. Von den Stangenelementen 85, 86 stehen Lagerschenkel 87 ab, die in den Lagerelementen 83 aufgenommen sind und dort drehbar gelagert sind.

Das Stangenelement 86 ist zweiteilig und weist einen ersten und einen zweiten Abschnitt 88, 89 auf, die durch ein Halteelement 90 miteinander verbunden sind. Vorteilhaft ist der Tragrahmen 65 aus einem Drahtstück gefertigt, dessen jeweilige Längsenden durch das Halteelement 90 miteinander verbunden sind.

Die Tragrahmen 63-65 bestehen zweckmäßigerweise aus Metalldraht. Selbstverständlich wären auch Kunststoffelemente ohne weiteres möglich. Insbesondere könnte beispielsweise der hintere Tragrahmen 65 ein aus einem einzigen Kunststoffteil gebildeter Tragrahmen sein.

Während der Tragrahmen 65 eine im wesentlichen quadratische Form hat, sind die beiden oberen und unteren Tragrahmen 63, 64 trapezförmig.

Durch die elastischen Seitenwände 40, 41 werden die Tragrahmen 62-65 in eine zueinander winkelige, aufgerichtete Verstellung vorgespannt. Die Feder 51 zeigt schematisch, wie durch die entsprechende diagonale Beaufschlagung der Tragrahmen 62-65 von den jeweils einander gegenüberliegenden Eckbereichen her die Aufspannung funktioniert. In der Gebrauchsstellung G sind die Seitenwände 40, 41 entspannt, während sie in der Nichtgebrauchsstellung N gespannt sind und somit das Tragegestell 60 in Richtung der Gebrauchsstellung G belasten.

Die Seitenwände 40, 41 sind zweckmäßigerweise ebenso wie die anderen Wände 36-39 des Staubbehälters 32 luftdurchlässig. Beispielsweise bestehen die Wände 36-41 aus einem Textilmaterial, wobei die Seitenwände 40, 41 zweckmäßigerweise aus elastischem, zur Bildung einer Feder geeignetem Material bestehen, beispielsweise Fasern mit Federwirkung haben, mit einer entsprechenden Beschichtung versehen sind oder dergleichen.

Vor die Tragplatte 61 steht zur Bildung der Anschlusseinrichtung 31 ein Anschlussstutzen 91 vor. Der Anschlussstutzen 91 durchdringt beispielsweise den Einlass 42 des Staubbehälters 32.

Am Außenumfang des Anschlussstutzens 91 kann ein zum Ergreifen günstiger Ring 92, beispielsweise mit einer Riffelung, vorgesehen sein. Es ist auch möglich, das mithilfe des Rings 92 ein vor den Einlass 42 vorstehende Abschnitt des flexiblen Staubbehälters 32 gehalten wird, beispielsweise in der Art einer Überwurfhülse oder dergleichen.

In Figur 7 wird deutlich, dass die beiden Tragrahmen 62, 63 eine erste Tragrahmen-Anordnung 93 bildet, deren Längslänge im gefalteten Zustand der Längslänge der zweiten Tragrahmen-Anordnung bestehend aus den Tragrahmen 64, 65 entspricht.

Das Tragegestell 60 kann in der Nichtgebrauchsstellung N eine Flachgestalt einnehmen, braucht also wenig Platz. Sie nimmt dabei in vorteilhafterweise auch den in Figur 7 nicht dargestellten flexiblen Staubbehälter 32 in Richtung der Nichtgebrauchsstellung N mit, so dass auch dieser flach gefaltet ist und nur wenig Stauvolumen beansprucht.

## Patentansprüche

1. Staubsammelvorrichtung für eine Hand-Werkzeugmaschine (10), insbesondere für eine Säge (11), die einen Staubeinlass (35) und eine Anschlusseinrichtung (31) zur Befestigung an einem Maschinen-Staubauslass (19) der Hand-Werkzeugmaschine (10) aufweist, so dass der Maschinen-Staubauslass (19) mit einem Staubeinlass (35) der Staubsammelvorrichtung (30) kommuniziert und aus dem Maschinen-Staubauslass (19) ausströmende Partikel (P) in einen Staubsammelraum (34) eines flexiblen Staubbehälters (32) der Staubsammelvorrichtung (30) einströmen können, wobei der flexible Staubbehälter (32) zur Verringerung seines Au-ßenvolumens in eine Faltstellung faltbar ist, und wobei die Staubsammelvorrichtung (30) eine Tragstruktur (33) zum Halten des flexiblen Staubbehälters (32) aufweist, wobei die Tragstruktur (33) zwischen einer Nichtgebrauchsstellung (N) und einer für den Gebrauch der Staubsammelvorrichtung (30) vorgesehenen Gebrauchsstellung (G) verstellbar ist, wobei die Tragstruktur (33) in der Nichtgebrauchsstellung (N) ein gegenüber der Gebrauchsstellung (G) kleineres Stauvolumen aufweist und in der Gebrauchsstellung (G) den flexiblen Staubbehälter (32) in einem aufgefalteten Zustand hält, so dass der Staubsammelraum (34) ein gegenüber der Faltstellung größeres Aufnahmevolumen zur Aufnahme der Partikel (P) bereit stellt, wobei sie eine Federanordnung (50) aufweist, die die Tragstruktur (33) in Richtung der Gebrauchsstellung (G) belastet, so dass die Tragstruktur (33) entgegen der Kraft der Federanordnung (50) in die Nichtgebrauchsstellung (N) verstellbar ist, **dadurch gekennzeichnet, dass** die Federanordnung (50) zumindest teilweise durch den Staubbehälter (32) gebildet ist oder eine einen Bestandteil des Staubbehälters (32) bildende, insbesondere durch eine elastische Wand (40, 41) gebildete, Feder (52) umfasst.

2. Staubsammelvorrichtung (30) nach Anspruch 1, **dadurch gekennzeichnet, dass** die Federanordnung (50) mindestens eine einen Bestandteil der Tragstruktur (33) umfassende Feder umfasst.

3. Staubsammelvorrichtung nach Anspruch 1 oder 2, **dadurch gekennzeichnet, dass** der Staubbehälter (32) mindestens eine elastische Wand (40, 41) aufweist, die in der Gebrauchsstellung (G) entlastet ist und in der Nichtgebrauchsstellung (N) eine Federspannung aufweist, und/oder dass der Staubbehälter (32) eine insbesondere der Anschlusseinrichtung (31) gegenüberliegende Entnahmeöffnung (43) für die Partikel aufweist und/oder der Staubbehälter (32) mindestens eine Wand (36-39) aus Textilmaterial und/oder flexible Wände (36-41) aufweist.

4. Staubsammelvorrichtung nach einem der vorhergehenden Ansprüche, **dadurch gekennzeichnet, dass** die Tragstruktur (33) einen integralen Bestandteil des Staubbehälters (32) bildet oder dass der Staubbehälter (32) lösbar an der Tragstruktur (33) befestigbar ist und von der Tragstruktur (33) gehalten wird.

5. Staubsammelvorrichtung nach einem der vorhergehenden Ansprüche, **dadurch gekennzeichnet, dass** der Staubbehälter (32) einen Überzug über die Tragstruktur (33) bildet.

6. Staubsammelvorrichtung nach einem der vorhergehenden Ansprüche, **dadurch gekennzeichnet, dass** die Tragstruktur (33) ein faltbares Tragegestell (69) umfasst.

7. Staubsammelvorrichtung nach Anspruch 6, **dadurch gekennzeichnet, dass** das Tragegestell (69) eine Anordnung relativ zueinander beweglich gelagerter Tragrahmen (62-65) mit einem ersten Tragrahmen (62-65) und mindestens einem zweiten Tragrahmen (62-65) aufweist.

8. Staubsammelvorrichtung nach Anspruch 7, **dadurch gekennzeichnet, dass** mindestens zwei Tragrahmen (62-65) schwenkbeweglich und/oder schiebebeweglich aneinander gelagert sind und/oder dass mindestens ein Tragrahmen (62-65) eine Wand des Staubbehälters (32) bildet oder zum Aufspannen einer Wand (36-38, 40, 41) des Staubbehälters (32) ausgestaltet ist.

9. Staubsammelvorrichtung nach Anspruch 7 oder 8, **dadurch gekennzeichnet, dass** mindestens ein Tragrahmen (62-65) ein von dem Tragrahmen (62-65) gehaltenes Gitter aufweist oder durch den Außenumfang des Gitters gebildet ist und/oder mindestens ein Tragrahmen (62-65) eine insbesondere mit Luftdurchlässen (71) versehene Tragplatte (61) aufweist oder durch den Außenumfang der Tragplatte (61) gebildet ist und/oder mindestens ein Tragrahmen (62-65) durch eine stangenartige Rahmenstruktur gebildet ist und/oder die Anschlusseinrichtung (31) an einem Tragrahmen (62-65) angeordnet ist.

10. Staubsammelvorrichtung nach einem der Ansprüche 7 bis 9, **dadurch gekennzeichnet, dass** mindestens zwei Tragrahmen (62-65) der Tragstruktur (33) in der Nichtgebrauchsstellung (N) flach aneinander anliegen und/oder an mindestens einem Tragrahmen (62-65) ein Anschlag zum Anschlagen an einem anderen Tragrahmen (62-65) in der Gebrauchsstellung (G) und/oder der Nichtgebrauchsstellung (N) vorgesehen ist und/oder mindestens ein Tragrahmen (62-65) trapezförmig ist.

11. Staubsammelvorrichtung nach einem der Ansprüche 7 bis 10, **dadurch gekennzeichnet, dass** die Tragstruktur (33) zwei Paare von Tragrahmen-Anordnungen (93, 94) umfasst, von denen jede Tragrahmen-Anordnung (93, 94) mindestens zwei Tragrahmen (62-65) umfasst, wobei in der Nichtgebrauchsstellung (N) die Summe der Längen der Tragrahmen (62, 63) der einen Tragrahmen-Anordnung (93) der Summe der Längen der Tragrahmen (64, 65) der anderen Tragrahmen-Anordnung (94) im Wesentlichen entspricht, so dass die Tragrahmen (62-65) der beiden Tragrahmen-Anordnungen (93, 94) in der Nichtgebrauchsstellung (N) flach aufeinander zu liegen kommen.

12. Staubsammelvorrichtung nach einem der Ansprüche 7 bis 11, **dadurch gekennzeichnet, dass** mindestens zwei Tragrahmen (62-65) der Tragstruktur (33) durch die Federanordnung (50) in eine zueinander winkelige Stellung belastet sind.

13. Staubsammelvorrichtung nach einem der vorhergehenden Ansprüche, **dadurch gekennzeichnet, dass** der Staubeinlass (35) mit einer Lenkfläche zum Lenken des Staubs in einen vom Staubeinlass (35) abgewandten hinteren Bereich des Staubbehälters (32) versehen ist und/oder unterhalb der Anschlusseinrichtung (31) ein Aufnahmevolumen des Staubbehälters (32) vorgesehen ist, wobei eine Seitenwandfläche der Staubsammelvorrichtung (30) unterhalb der Anschlusseinrichtung (31) mindestens dieselbe Flächenausdehnung wie die Anschlusseinrichtung (31) aufweist.

14. Hand-Werkzeugmaschine (10), insbesondere Säge (11), mit einer Staubsammelvorrichtung (30) nach einem der vorhergehenden Ansprüche.

## Claims

1. Dust collecting device for a hand-operated power tool (10), in particular a saw (11), which has a dust inlet (35) and a connection device (31) for fastening to a machine dust outlet (19) of the hand-operated power tool (10), so that the machine dust outlet (19) communicates with a dust inlet (35) of the dust collecting device (30) and particles (P) flowing out of the machine dust outlet (19) are able to flow into a dust collection chamber (34) of a flexible dust container (32) of the dust collecting device (30), wherein the flexible dust container (32) may be folded into a folded position to reduce its outside volume, and wherein the dust collecting device (30) has a support structure (33) to hold the flexible dust container (32), wherein the support structure (33) is adjustable between an inoperative position (N) and a position of use (G) provided for use of the dust collecting device (30), wherein the support structure (33) in the inoperative position (N) has a smaller storage volume than in the position of use (G) and , in the position of use (G), holds the flexible dust container (32) in an unfolded state, so that the dust collection chamber (34) provides a larger holding capacity for holding the particles (P) than in the folded position, wherein it has a spring assembly (50) which biases the support structure (33) in the direction of the position of use (G), so that the support structure (33) is adjustable into the inoperative position (N) against the force of the spring assembly (50), **characterised in that** the spring assembly (50) is formed at least partly by the dust container (32) or comprises a spring (52) forming a part of the dust container (32) and formed in particular by a flexible wall (40, 41).

2. Dust collecting device (30) according to claim 1, **characterised in that** the spring assembly (50) comprises at least one spring comprising a part of the support structure (33).

3. Dust collecting device according to claim 1 or 2, **characterised in that** dust container (32) has at least one flexible wall (40, 41), which is unstressed in the position of use (G) and in the inoperative position (N) has a spring tension, and/or that the dust container (32) has an extraction opening (43) for the particles , in particular lying opposite the connection device (31), and/or the dust container (32) has at least one wall (36-39) of textile material and/or flexible walls (36-41).

4. Dust collecting device according to any of the preceding claims, **characterised in that** the support structure (33) forms an integral part of the dust container (32) or that the dust container (32) may be fastened releasably to the support structure (33) and is held by the support structure (33).

5. Dust collecting device according to any of the preceding claims, **characterised in that** the dust container (32) forms a cover over the support structure (33).

6. Dust collecting device according to any of the preceding claims, **characterised in that** the support structure (33) comprises a foldable support frame (69).

7. Dust collecting device according to claim 6, **characterised in that** the support frame (69) has an arrangement of support frames (62-65) mounted movably relative to one another, with a first support frame (62-65) and at least one second support frame (62-65).

8. Dust collecting device according to claim 7, **characterised in that** at least two support frames (62-65) are mounted on one another with the ability to swivel or slide, and/or that at least one support frame (62-65) forms a wall of the dust container (32) or is designed to stretch a wall (36-38, 40, 41) of the dust container (32).

9. Dust collecting device according to claim 7 or 8, **characterised in that** at least one support frame (62-65) has a grid held by the support frame (62-65) or is formed by the outer periphery of the grid, and/or at least one support frame (62-65) has a support plate (61) provided in particular with air passages (71) or is formed by the outer periphery of the support plate (61), and/or at least one support frame (62-65) is formed by a rod-like frame structure, and/or the connection device (31) is arranged on a support frame (62-65).

10. Dust collecting device according to any of claims 7 to 9, **characterised in that** at least two support frames (62-65) of the support structure (33) lie flat against one another in the inoperative position (N), and/or there is provided on at least one support frame (62-65) a stop for stopping on another support frame (62-65) in the position of use (G) and/or the inoperative position (N), and/or at least one support frame (62-65) is trapezoidal.

11. Dust collecting device according to any of claims 7 to 10, **characterised in that** the support structure (33) comprises two pairs of support frame assemblies (93, 94), of which each support frame assembly (93, 94) comprises two support frames (62-65) wherein, in the inoperative position (N), the total of the lengths of the support frames (62, 63) of the one support frame assembly (93) substantially correspond to the total of the lengths of the support frames (64, 65) of the other support frame assembly (94), so that the support frames (62-65) of the two support frame assemblies (93, 94) come to lie flat upon one another in the inoperative position (N).

12. Dust collecting device according to any of claims 7 to 11, **characterised in that** at least two support frames (62-65) of the support structure (33) are biased by the spring assembly (50) in a position at an angle to one another.

13. Dust collecting device according to any of the preceding claims, **characterised in that** the dust inlet (35) is provided with a guide surface for guiding the dust into a rear area of the dust container (32) facing away from the dust inlet (35), and/or a holding capacity of the dust container (32) is provided beneath the connection device (31), wherein a side wall surface of the dust collecting device (30) has below the connection device (31) at least the same surface area as the connection device (31).

14. Hand-operated power tool (10), in particular saw (11), with a dust collecting device (30) according to any of the preceding claims.

## Revendications

1. Dispositif collecteur de poussière pour une machine-outil manuelle (10), en particulier pour une scie (11), qui présente une entrée de poussière (35) et un système de raccordement (31) destiné à être fixé au niveau d'une sortie de poussière de machine (19) de la machine-outil manuelle (10) de sorte que la sortie de poussière de machine (19) communique avec une entrée de poussière (35) du dispositif collecteur de poussière (30) et un flux de particules (P) sortant de la sortie de poussière de machine (19) peut affluer dans un espace collecteur de poussière (34) d'un contenant de poussière (32) flexible du dispositif collecteur de poussière (30), dans lequel le contenant de poussière (32) flexible peut être plié dans une position de pliage afin de réduire son volume extérieur, et dans lequel le dispositif collecteur de poussière (30) présente une structure porteuse (33) servant à maintenir le contenant de poussière (32) flexible, dans lequel la structure porteuse (33) peut être déplacée entre une position de non-utilisation (N) et une position d'utilisation (U) prévue pour l'utilisation du dispositif collecteur de poussière (30), dans lequel la structure porteuse (33) présente dans la position de non-utilisation (N) un volume de rangement inférieur par rapport à la position d'utilisation (U) et maintient, dans la position d'utilisation (U), le contenant de poussière (32) flexible dans un état déplié de sorte que l'espace collecteur de poussière (34) fournisse un volume de réception plus grand par rapport à la position de pliage servant à recevoir les particules (P), dans lequel il présente un ensemble de ressorts (50), qui contraint la structure porteuse (33) en direction de la position d'utilisation (U) de sorte que la structure porteuse (33) puisse être déplacée dans la position de non-utilisation (N) à l'encontre de la force de l'ensemble de ressorts (50), **caractérisé en ce que** l'ensemble de ressorts (50) est formé au moins en partie par le contenant de poussière (32) ou comprend un ressort (52) formant un élément constitutif du contenant de poussière (32), formé en particulier par une paroi (40, 41) élastique.

2. Dispositif collecteur de poussière (30) selon la revendication 1, **caractérisé en ce que** l'ensemble de ressorts (50) comprend au moins un ressort comprenant un élément constitutif de la structure porteuse (33).

3. Dispositif collecteur de poussière selon la revendication 1 ou 2, **caractérisé en ce que** le contenant de poussière (32) présente au moins une paroi (40, 41) élastique, qui est déchargée dans la position d'utilisation (U) et présente, dans la position de non-utilisation (N), une tension de ressort, et/ou que le contenant de poussière (32) présente une ouverture de prélèvement (43) faisant face en particulier au système de raccordement (31) pour les particules et/ou le contenant de poussière (32) présente au moins une paroi (36 - 39) composée d'un matériau textile et/ou des parois (36 - 41) flexibles.

4. Dispositif collecteur de poussière selon l'une quelconque des revendications précédentes, **caractérisé en ce que** la structure porteuse (33) forme une partie intégrante du contenant de poussière (32), ou que le contenant de poussière (32) peut être fixé de manière amovible au niveau de la structure porteuse (33) et est maintenu par la structure porteuse (33).

5. Dispositif collecteur de poussière selon l'une quelconque des revendications précédentes, **caractérisé en ce que** le contenant de poussière (32) forme un revêtement par-dessus la structure porteuse (33).

6. Dispositif collecteur de poussière selon l'une quelconque des revendications précédentes, **caractérisé en ce que** la structure porteuse (33) comprend un châssis porteur (69) pliable.

7. Dispositif collecteur de poussière selon la revendication 6, **caractérisé en ce que** le châssis porteur (69) présente un ensemble par rapport à des cadres porteurs (62 - 65) montés de manière mobile les uns par rapport aux autres avec un premier cadre porteur (62 - 65) et au moins un deuxième cadre porteur (62 - 65).

8. Dispositif collecteur de poussière selon la revendication 7, **caractérisé en ce qu'**au moins deux cadres porteurs (62 - 65) sont montés les uns au niveau des autres de manière mobile par pivotement et/ou de manière mobile par glissement, et/ou qu'au moins un cadre porteur (62 - 65) forme une paroi du contenant de poussière (32) ou est configuré pour serrer une paroi (36 - 38, 40, 41) du contenant de poussière (32).

9. Dispositif collecteur de poussière selon la revendication 7 ou 8, **caractérisé en ce qu'**au moins un cadre porteur (62 - 65) présente une grille maintenue par le cadre porteur (62 - 65) ou est formé par le contour extérieur de la grille, et/ou au moins un cadre porteur (62 - 65) présente une plaque porteuse (61) pourvue en particulier de passages d'air (71) ou est formé par le contour extérieur de la plaque porteuse (61) et/ou au moins un cadre porteur (62 - 65) est formé par une structure de cadre à la manière d'une barre et/ou le système de raccordement (31) est disposé au niveau d'un cadre porteur (62 - 65).

10. Dispositif collecteur de poussière selon l'une quelconque des revendications 7 à 9, **caractérisé en ce qu'**au moins deux cadres porteurs (62 - 65) de la structure porteuse (33) reposent l'un contre l'autre à plat dans la position de non-utilisation (N) et/ou une butée servant à venir en butée contre un autre cadre porteur (62 - 65) dans la position d'utilisation (U) et/ou dans la position de non-utilisation (N) est prévue au niveau d'au moins un cadre porteur (62 - 65) et/ou au moins un cadre porteur (62 - 65) est de forme trapézoïdale.

11. Dispositif collecteur de poussière selon l'une quelconque des revendications 7 à 10, **caractérisé en ce que** la structure porteuse (33) comprend deux paires d'ensembles de cadres porteurs (93, 94), dont chaque ensemble de cadres porteurs (93, 94) comprend au moins deux cadres porteurs (62 - 65), dans lequel dans la position de non-utilisation (N), la somme des longueurs des cadres porteurs (62, 63) d'un ensemble de cadres porteurs (93) correspond sensiblement à la somme des longueurs des cadres porteurs (64, 65) de l'autre ensemble de cadres porteurs (94) si bien que les cadres porteurs (62 - 65) des deux ensembles de cadres porteurs (93, 94) viennent se placer les uns sur les autres à plat dans la position de non-utilisation (N).

12. Dispositif collecteur de poussière selon l'une quelconque des revendications 7 à 11, **caractérisé en ce qu'**au moins deux cadres porteurs (62 - 65) de la structure porteuse (33) sont contraints par l'ensemble de ressorts (50) dans une position angulaire les uns par rapport aux autres.

13. Dispositif collecteur de poussière selon l'une quelconque des revendications précédentes, **caractérisé en ce que** l'entrée de poussière (35) est pourvue d'une surface de guidage servant à guider la poussière dans une zone arrière, opposée à l'entrée de poussière (35), du contenant de poussière (32) et/ou un volume de réception du contenant de poussière (32) est prévu sous le système de raccordement (31), dans lequel une surface de paroi latérale du dispositif collecteur de poussière (30) présente, sous le système de raccordement (31), au moins la même extension de surface que le système de raccordement (31).

14. Machine-outil manuelle (10), en particulier scie (11), avec un dispositif collecteur de poussière (30) selon l'une quelconque des revendications précédentes.
